# EUROPEAN PATENT APPLICATION

(11) **EP 1 589 491 A2**
(43) Date of publication of application: **26.10.2005**
(21) Application number: 05252487.3
(22) Date of filing: 20.04.2005
(51) Int. Cl.: G07C 9/00, G07F 7/10

(54) **Biometric data card and authentication method**

(30) Priority: 20.04.2004 US 828443
(71) Applicant: Agilent Technologies, Inc., Palo Alto, CA 94306 (US)
(72) Inventor: Baer, Richard, Los Altos California 94024 (US)
(74) Representative: Tollett, Ian

(57) **Abstract**

A biometric data card (100) includes an image sensor (130) for capturing an image of a biometric feature (500) of a user of the biometric data card (100) and producing first image data (170) representing the image. The biometric data card (100) compares the first image data (170) to second image data stored within the biometric data card (100) to authenticate the user. The biometric data card (100) is usable with a terminal (400) including a slot (450) for receiving the biometric data card (100). The terminal (400) can further include an optical element (540) optically coupled to direct the image onto the image sensor (130) of the biometric data card (100).

## Description

The present invention relates generally to a biometric data card, a terminal for authenticating a user, a system for authenticating a user and a method for authenticating a user. More particularly it relates to biometric authentication systems using smart cards to verify the identity of a user.

Smart cards, which are small credit-card sized devices containing electronic circuitry, are used in a variety of applications. Common examples of smart cards include pre-paid phone cards, pay-TV access cards and subscriber identification module (SIM) cards used in cellular telephones. Most smart cards contain an internal memory and processor, and an external contact pad for making an electrical connection to the terminal in which the card is inserted. The terminal typically provides a user interface (e.g., key pad and display) that enables a user of the smart card to access information either stored on the smart card itself or stored within a system connected to or within the terminal.

Through the electrical connection between the smart card and the user interface of the terminal, a user can engage in a number of different activities, such as accessing personal or system information, performing terminal-related functions and conducting various transactions. The information contained on the smart card is commonly in the form of one or more of the following: authentication information, such as a personal identification number (PIN), financial information, such as an electronic credit amount, and personal information, such as subscriber features.

However, the physical separation of the user interface from the memory and processor within the smart card makes the card susceptible to attacks from the terminal. For example, a terminal that is designed to accept a PIN can store the PIN without the user's permission and use the stored PIN in a subsequent attack on the smart card. With the PIN, the terminal is also able to intercept and modify other transactions involving the smart card. For example, the terminal can overcharge the smart card and/or undercharge the back-end system.

Recently, biometric fingerprint recognition smart cards have been proposed as an alternative to PIN-based smart cards. Biometrics refers to the identification or verification of the identity of an individual based on his or her physiological or behavioral characteristics. Existing biometric fingerprint recognition smart cards operate by storing biometric fingerprint data on the smart card. A sensor within the terminal senses live biometric fingerprint data representing the user's fingerprint and compares the live biometric fingerprint data with the stored biometric fingerprint data uploaded from the smart card to the terminal to authenticate the user.

However, uploading the biometric fingerprint data into the terminal presents the same security issues as entering the PIN into the terminal. In addition, many biometric fingerprint recognition systems use thermal or capacitive sensors, which are not accurate as image sensors. For other biometric features, such as facial patterns or iris patterns, imaging systems with more sophisticated optics are needed to adequately authenticate a user. Face recognition and iris recognition systems may also be more desirable than fingerprint recognition system in many applications where users experience fingerprint smoothing due to age, wear, or the use of cosmetics. Furthermore, some users may be reticent to touch objects that might become contaminated, and therefore, face or iris recognition systems may be preferred in applications involving these users.

Therefore, there is a need for a secure biometric smart card for authenticating a user, while minimizing the risk of attack on the smart card. There is also a need for a biometric smart card utilizing an imaging system capable of accurately authenticating a user. Furthermore, there is a need for a biometric smart card for authenticating a user based biometric features that are more accurate than fingerprints.

Embodiments of the present invention provide a biometric data card including an image sensor for capturing an image of a biometric feature of a user of the biometric data card and producing first image data representing the image. The biometric data card has a memory that stores second image data and a processor in communication with the image sensor and the memory and that is operable to compare the first image data to second image data and to generate, in response to the comparison, authentication information representative of authentication of the user.

Other embodiments of the present invention provide a terminal including an optical interface configured to receive light reflected from a biometric feature of the user. The terminal further includes an optical element optically coupled to the optical interface via an optical path. The optical element is operable to form an image of the biometric feature from the reflected light and to direct the image onto an image sensor. The terminal also has a card interface configured to receive the biometric data card, and operable to authenticate the user based on the image and to provide an authentication signal to the terminal.

Further embodiments of the present invention provide a biometric authentication system including a biometric data card and a terminal. The biometric data card includes an image sensor for capturing an image of a biometric feature of the user and for producing first image data representing the image. The biometric data card is operable to perform a comparison of the first image data with second image data and to generate, in response to the comparison, authentication information representative of authentication of the user. The terminal has a card interface configured to receive the biometric data card and is operable to receive the authentication information from the biometric data card. The terminal includes an optical element arranged to direct light from the biometric feature onto the image sensor.

Additional embodiments of the present invention provide a method for authenticating a user using a biometric data card. First biometric image data is produced in the biometric data card in response to an image of a biometric feature of the user. The first biometric image data is compared in the biometric data card with second biometric image data, and the user is authenticated in response to the comparison.

Advantageously, embodiments of the present invention enable accurate biometric authentication to be performed by the smart card, which makes the card more resistant to attack. In addition, by keeping all of the biometric image data representing the biometric feature in the card, the card is able to perform secure biometric authentication. Moreover, providing the lens within the terminal and the image sensor within the card enables accurate biometric recognition to be achieved without requiring the user to make contact with the sensing element. For example, facial and iris recognition can be performed without requiring the user to touch the terminal. Furthermore, the invention provides embodiments with other features and advantages in addition to or in lieu of those discussed above. Many of these features and advantages are apparent from the description below with reference to the following drawings.

A number of preferred embodiments of the disclosed invention will be described with reference to the accompanying drawings, in which:
FIG. 1 is a simplified schematic side view of an exemplary biometric data card, in accordance with embodiments of the present invention;
FIG. 2 is a simplified top view of the biometric data card of FIG. 1;
FIG. 3A is a block diagram of exemplary information and processing routines within a memory of the biometric data card;
FIG. 3B illustrates various processing components of the biometric data card;
FIG. 4 is a simplified front view of an exemplary terminal for use with the biometric data card, in accordance with embodiments of the present invention;
FIG. 5 is a simplified schematic side view of the terminal of FIG. 4;
FIG. 6 is a block diagram illustrating a physical and logical connection between the biometric data card and the terminal;
FIG. 7 is a signal diagram illustrating exemplary signals sent between the terminal and the biometric data card;
FIG. 8 is a flow chart illustrating an exemplary process for authenticating a user on the biometric data card, in accordance with embodiments of the present invention;
FIG. 9 is flow chart illustrating an exemplary process for authorizing a user to interact with a terminal using a biometric data card, in accordance with embodiments of the present invention;
FIG. 10 is a flow chart illustrating an exemplary process for providing feedback to set image capture parameters, in accordance with embodiments of the present invention;
FIG. 11 is a flow chart illustrating an exemplary process for providing feedback to align the biometric feature for image capture, in accordance with embodiments of the present invention;
FIG. 12 is a flow chart illustrating an exemplary process for capturing and comparing stored biometric image data with current biometric image data to authenticate a user, in accordance with embodiments of the present invention; and
FIG. 13 is a flow chart illustrating another exemplary process for authenticating a user on a biometric data card, in accordance with embodiments of the present invention.

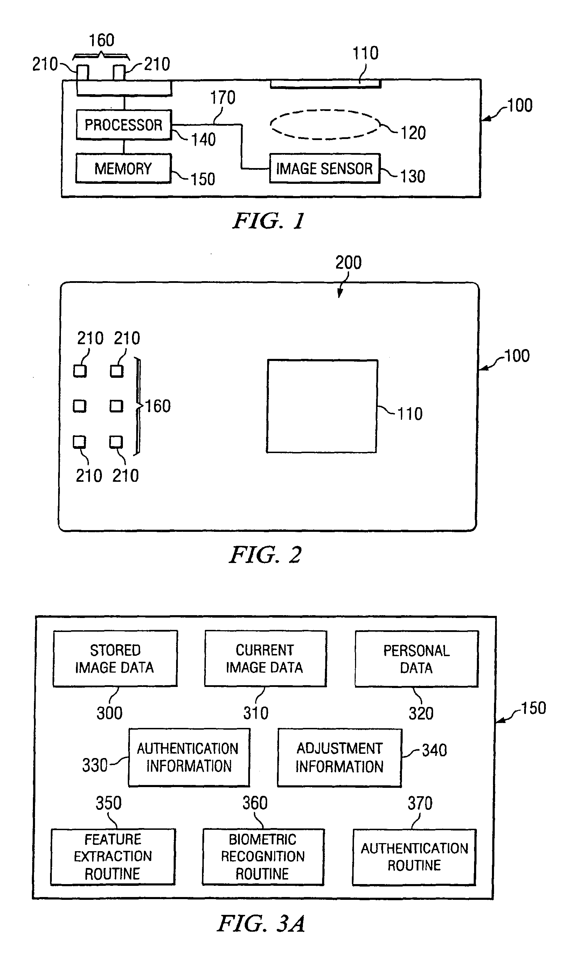

FIG. 1 is a simplified schematic side view of an exemplary biometric data card 100 for authenticating a user based on a biometric feature of the user, in accordance with embodiments of the present invention. For example, the biometric feature can be a fingerprint, face shape, facial feature, iris, hand shape, hand feature or any other unique physical characteristic of the user that can be readily identified.

The biometric data card 100 includes an optical interface 110 formed of glass or other wear resistant material that is transparent to light. For example, inexpensive glass-fill package technology developed by companies, such as Shellcase, Inc., can be used to create the optical interface 110. Light representing an image of the biometric feature of the user enters the biometric data card 100 through the optical interface 110 and impinges on an optical image sensor 130 to capture the image of the biometric feature. The optical image sensor 130 is a CCD (Charge Coupled Device), CMOS-APS (Complementary Metal Oxide Semiconductor - Active Pixel Sensor) or any other type of optical image sensor 130. A conductive fill can be used to protect the optical image sensor 130 against electro-static discharge.

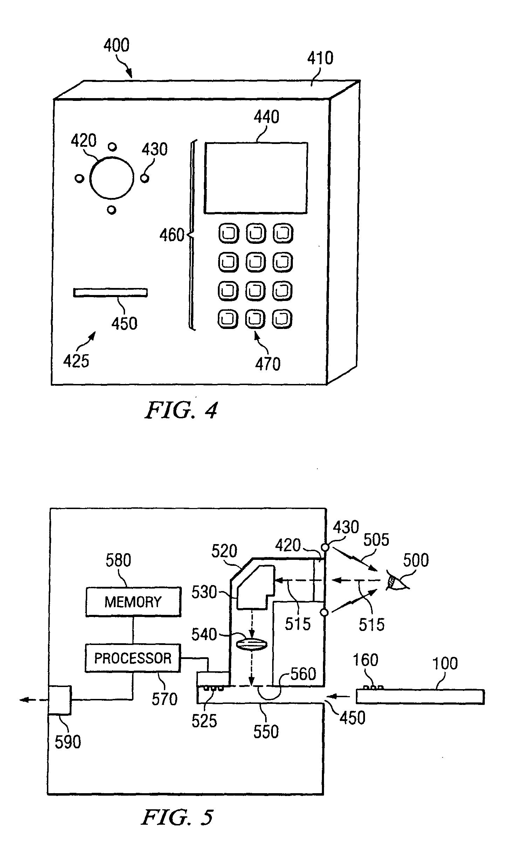

The optical image sensor 130 acquires the image of the biometric feature in the form of image data representing the intensity of light reflected from the surface of the biometric feature measured at a plurality of photo detector locations. Each photo detector captures a picture element (pixel) of the image, and all pixels combine to form the complete image. The photo detectors can be, for example, photodiodes or phototransistors arranged in an array. In one embodiment, a focusing element 120, such as a miniature lens, diffractive element, lens array or diffractive element array, is incorporated into the biometric data card 100 to form the image and direct the image onto the optical image sensor 130. In other embodiments, a focusing element is provided external to the card in addition to or instead of the focusing element 120 to direct the image onto the optical image sensor 130. For example, as described below in connection with FIG. 5, an optical element 540 is included within a terminal 400 for directing an image onto the optical image sensor in the biometric data card 100.

The optical image sensor 130 provides the image data 170 (e.g., raw pixel values) to a processor 140 within the biometric data card 100. The processor 140 can be any microprocessor, microcontroller, programmable logic device or other processing device capable of processing the image data 170 and authenticating the user. The processor 140 can be a separate chip or located on the same chip as the optical image sensor 130. A memory 150 stores various information and processing routines utilized by the processor 140. For example, the memory 150 stores image data against which the current image data 170 is compared to authenticate the user. The processor 140 accesses the memory 150 to retrieve the stored image data and compares the stored image data to the current image data 170 to authenticate the user. The memory 150 can include one or more of the following: random access memory (RAM), read-only memory (ROM), flash memory, EEPROM, or any other type of storage device.

A contact pad 160 provides an electrical connection to a terminal or other device to supply power to the biometric data card 100. The terminal is described in more detail below in connection with FIGs. 4-7. In other embodiments, a power source (not shown) can also be included on the biometric data card 100. In further embodiments, an illumination source (not shown) can be included on the biometric data card 100 to illuminate the biometric feature of the user.

FIG. 2 is a simplified top view of the biometric data card 100 of FIG. 1. A top surface 200 of the biometric data card 100 is shown in FIG. 2. The top surface 200 includes the contact pad 160 and the optical interface 110. The contact pad 160 includes multiple electrical contacts 210 for connecting to a terminal or other device. The optical interface 110 is positioned to receive light reflected from the surface of the biometric feature of the user. In one embodiment, the optical interface 110 is aligned to receive light reflected directly from the biometric feature of the user. In another embodiment, the optical interface 110 is aligned to receive the reflected light through optical elements within the terminal, as will be described in more detail below in connection with FIG. 5.

FIG. 3A is a block diagram of exemplary information and processing routines stored in the memory 150 of the biometric data card. The memory 150 stores stored image data 300 representing a prior image of the biometric feature of the user and current image data 310 representing a current image of the biometric feature of the user. In one embodiment, the stored image data 300 and current image data 310 each include raw pixel values representing the previous and current images, respectively. In another embodiment, the stored image data 300 and current image data 310 each include biometric image data extracted from the previous and current images, respectively. The biometric image data represents feature characteristics of the biometric feature.

To determine the feature characteristics of the previous and current images, a feature extraction routine 350 stored in the memory 150 is executed by the processor (shown in FIG. 1) to extract the feature characteristics from the current raw image data and stored raw image data. For example, the feature extraction routine 350 can include one or more algorithms for extracting iris patterns, fingerprint patterns, facial patterns or hand patterns. The biometric data card can be configured to support multiple feature extraction routines 350, depending on the level of security required. For example, credit transactions for amounts below $500 could require face recognition algorithms, while transactions above $500 could require iris recognition algorithms.

Once the feature characteristics have been extracted, a biometric recognition routine 360 within the memory 150 is executed by the processor to compare or match the current feature characteristics to the stored feature characteristics. For example, in biometric fingerprint recognition applications, the biometric recognition routine 360 can implement one or more fingerprint recognition algorithms, such as the algorithm described in N. Ratha et al., "A Real-Time Matching System for Large Fingerprint Database," IEEE Transactions on Pattern Analysis and Machine Intelligence, Vol. 18, No. 8, pp. 799-813 (1996), which is hereby incorporated by reference. As another example, inbiometric iris recognition applications, the biometric recognition routine 360 can implement one or more iris recognition algorithms, such as the algorithm described in J. Daugman, "How Iris Recognition Works," IEEE Transactions on Circuits & Systems for Video Technology, Vol. 14, No. 1, pp. 21-30 (Jan. 2004), which is hereby incorporated by reference. As a further example, in biometric iris recognition applications, the biometric recognition routine 360 can implement one or more face recognition algorithms, such as the algorithm described in D. Voth, "Face Recognition Technology," IEEE Intelligent Systems, Vol. 18, No. 2, pp. 4-7 (May-June 2003), which is hereby incorporated by reference.

If during the execution of the feature extraction routine 350 or biometric recognition routine 360, the processor determines that the extracted feature characteristics are insufficient to perform a reliable comparison, the processor can generate adjustment information 340 that provides instructions to the terminal and/or user to modify various parameters, such as illumination lens focus or zoom or, alignment of the biometric feature of the user to the terminal or optical interface of the biometric data card.

The output of the biometric recognition routine 360 (e.g., match or no match) is input to an authentication routine 370 that is executed by the processor to authenticate the user. The output of the authentication routine 370 is authentication information 330 indicating whether or not the user is authorized to access or use the biometric data card. In one embodiment, the authentication information 330 is transmitted to a terminal or other device to allow a user to interact with the terminal and/or biometric data card. In another embodiment, the authentication information 330 is utilized internally within the biometric data card to allow a user to access information stored in the biometric data card.

An example of information stored in the biometric data card is personal data 320 associated with the user that can be accessed once the user is authenticated. Examples of personal data 320 include subscriber features subscribed to by the user in cellular telephone applications, a credit amount in pre-paid phone card applications, medical information in medical card applications, credit card information in credit card applications, bank information in debit card applications and other personal information in other identification applications.

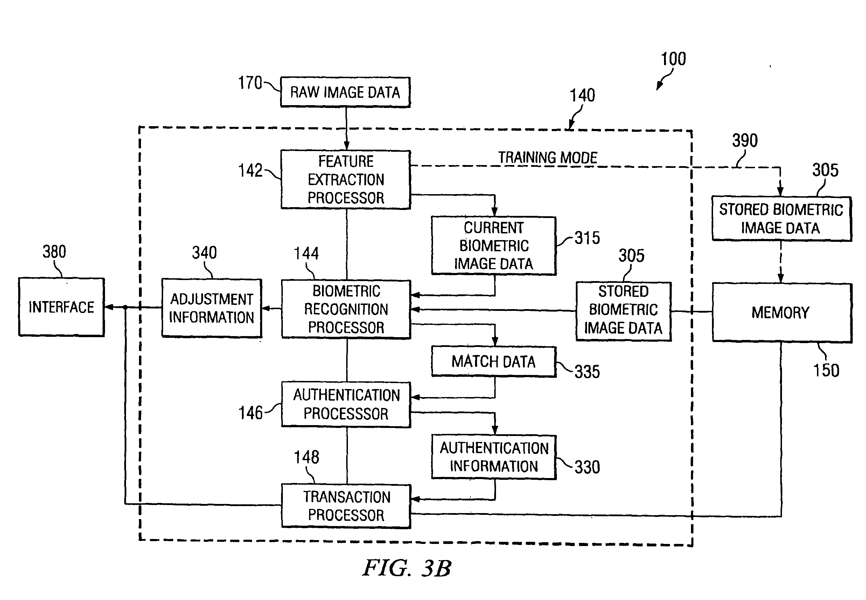

FIG. 3B illustrates various processing components of the biometric data card. The processor 140 within the biometric data card 100 receives raw image data 170 representing a biometric feature of the user from the image sensor (130, shown in FIG. 1) and processes the raw image data 170 to authenticate the user. The processor 140 can be a single, general processor, such as a microprocessor or a digital signal processor, that executes the processing routines shown in Figure 3A. Alternatively, the processor 140 can include multiple processors, such as ASICs or FPGA circuits, each configured to perform one or more functions equivalent to those of the processing routines shown in FIG. 3A. For example, as shown in FIG. 3B, the processor 140 includes a feature extraction processor 142, biometric recognition processor 144, authentication processor 146 and transaction processor 148.

The feature extraction processor 142 is configured to perform feature extraction equivalent to the feature extraction routine 350 shown in FIG. 3A to extract the feature characteristics of the biometric feature from the raw image data 170 and produce biometric image data representing the feature characteristics of the biometric feature. In a training mode 390, the feature extraction processor 142 records stored biometric image data 305 into the memory 150 for subsequent use in comparing the stored biometric image data 305 with new biometric image data for authentication purposes. For example, the training mode 390 operation can be performed when the biometric data card 100 is first issued to the user. Outside the training mode 390, the feature extraction processor 142 produces current biometric image data 315 representing the extracted feature characteristics of the biometric feature of the user for comparison with the stored biometric image data 305 to authenticate the user.

The biometric recognition processor 144 accesses the memory 150 to retrieve the stored biometric image data 305 and receives as input the current biometric image data 315 from the feature extraction processor 142. The biometric recognition processor 144 is configured to perform biometric recognition equivalent to the biometric recognition routine 360 shown in FIG. 3A to compare or match the current biometric image data 315 to the stored biometric image data 305.

If during the execution of biometric recognition, the biometric recognition processor 144 determines that the current biometric image data 315 is insufficient to perform a reliable comparison, the biometric recognition processor 144 generates adjustment information 340 that provides instructions to the terminal and/or user to modify various parameters, such as illumination, lens focus or zoom or alignment of the biometric feature of the user to the terminal or optical interface of the biometric data card. The adjustment information 340 is input to an interface 380 to the terminal or to other parts of the biometric data card 100. In one embodiment, the adjustment information 340 can be sent to the terminal and/or other parts of the biometric data card 100 from the interface 380 in a feedback signal. For example, the feedback signal can include steering signals that help the user align their face, eye or finger with the imaging system in the terminal and/or the biometric data card 100. It should be understood that the feature extraction processor 142 is additionally or alternatively capable of producing adjustment information 340 in either the training mode 390 or in normal operation.

The output of the biometric recognition processor 144 is match data 335 indicating whether the current biometric image data 315 sufficiently matches the stored biometric image data 315 to verify the identity of the user. The match data 335 is input to an authentication processor 146 that is configured to perform authentication equivalent to the authentication routine 370 shown in FIG. 3A to authenticate the user based on the match data 335. The output of the authentication processor 146 is authentication information 330 indicating whether or not the user is authorized to access or use the biometric data card.

In one embodiment, the authentication information 330 is transmitted to a terminal or other device to allow a user to interact with the terminal and/or biometric data card. In another embodiment, the authentication information 330 is transmitted to a transaction processor 148 (as shown in FIG. 3B) within the biometric data card 100 to allow a user to access information stored in the memory 150 on the biometric data card 100. In further embodiments, the authentication information 330 is transmitted to the transaction processor 148 to enable the transaction processor 148 to conduct transactions with the terminal and/or a remote server connected to the terminal or wirelessly connected to the terminal or biometric data card 100. The authentication information 330 can be transmitted in an authentication signal sent to the transaction processor 148 and/or terminal. The transaction processor 148 and memory 150 are also configured to perform the data storage, encryption and communication functions that are features of non-biometric smart cards.

FIG. 4 is a simplified front view of an exemplary terminal 400 for use with a biometric data card 100, in accordance with embodiments of the present invention. The terminal includes a housing 410 having a slot 450 for receiving the biometric data card 100. The slot 450 extends inwardly through a surface 425 of the housing 410 to provide access to a card interface (550, shown in FIG. 5, below) that is configured to facilitate insertion of the biometric data card 100 into, and removal of the biometric data card 100 from, the terminal 400. The terminal 400 further includes an optical interface 420 formed of glass or other wear resistant material that is transparent to light. The optical interface 420 is disposed at the surface 425 of the housing 410, and is shaped to promote alignment of a biometric feature of a user with an imaging system (not shown) within the terminal 400 and/or the biometric data card 100 when inserted. One or more illumination sources 430 are located on the surface 425 of the housing 410 in positions designed to provide sufficient illumination of the biometric feature during image capture. The illumination sources 430 can be any suitable source of electromagnetic radiation. By way of example, but not limitation, the illumination sources 430 can include a single light emitting diode (LED), multiple LEDs arranged to illuminate different portions of the biometric feature or an array of LEDs designed to emit light at a desired average intensity.

The terminal 400 further includes a user interface 460 extending outwardly through the surface 425 of the housing 410 for enabling interaction between the user terminal 400 and biometric data card 100. The user interface 460 includes a display 440 that is visible through the housing 410 to display data to the user and a keypad 470 having buttons capable of being depressed by the user to enter data into the terminal 400. It should be understood that the user interface 460 can be implemented using any combination of user interface devices, such as a touchscreen, light pen, stylus pen or voice activated interface. It should further be understood that the slot 450, optical interface 420 and user interface 460 can be located on the same surface 425 of the housing 410 or on different surfaces of the housing 410. For example, the slot 450 can be located on a bottom or side surface of the housing 410, while the optical interface 420 and user interface 460 can be located on a front surface of the housing 410.

FIG. 5 is a simplified schematic side view of the terminal 400 of FIG. 4 illustrating the operation of the terminal 400. When the biometric data card 100 is inserted into the card interface 550 via the slot 450 of the terminal 400, a contact pad 160 on the surface of the biometric data card 100 forms an electrical connection with a contact pad 525 at the end of the card interface 550 within the terminal 400. In one embodiment, the contact pad 525 within the terminal 400 connects to a processor 570 and memory 580 to control the operation of the user interface (460, shown in FIG. 4) and the transmission of signals to and from the biometric data card 100 in order to conduct transactions with the user. In another embodiment, the contact pad 525 within the terminal 400 serves as a power source to the biometric data card 100, and an optical or other type of interface connects to the processor 570 and memory 580 to transmit signals to and from the biometric data card 100 and user interface 460. The processor 570 further connects to a communications interface 590 that provides a wireline or wireless connection to a remote server (not shown).

Illumination sources 430 are disposed on the surface 425 of the housing 410 in a positional relationship to the optical interface 420 to illuminate a biometric feature 500 of a user with incident light 505. Reflected light 515 from the biometric feature 500 enters the terminal 400 through the optical interface 420 and is directed through an optical path 520 by transfer optics 530 towards an optical element 540. The optical element 540 can be, for example, a telephoto lens, wide-angle lens or other type of lens. The optical element 540 focuses the reflected light 515 to form an image of the biometric feature and directs the image onto an image sensor. In one embodiment, the image sensor is located in the biometric data card 100 (as shown in FIG. 1), and a window 560 is provided at the end of the optical path 520 to enable the image to be directed by the optical element 530 onto the image sensor within the biometric data card 100.

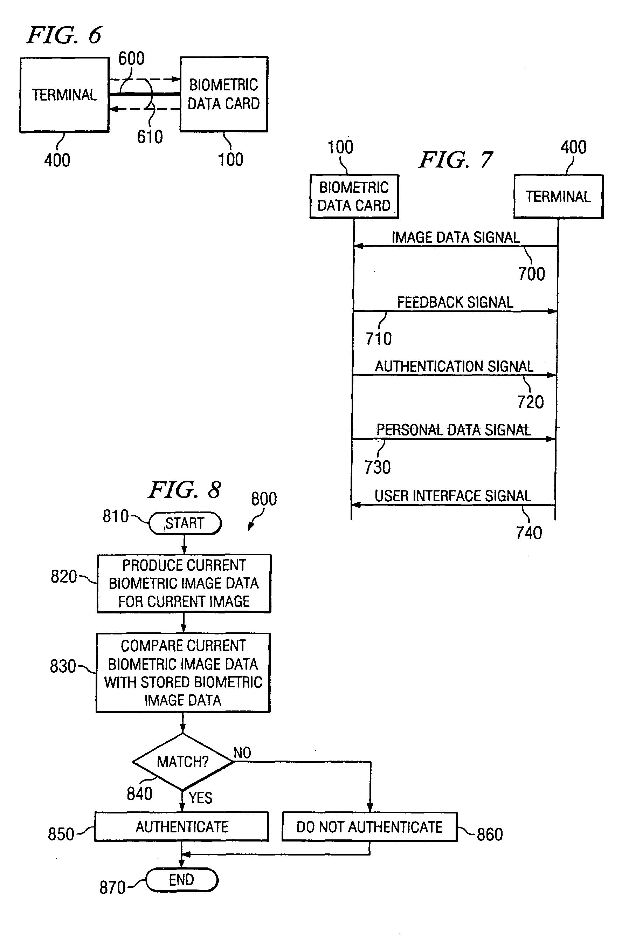

FIG. 6 is a block diagram illustrating a physical and logical connection between the biometric data card 100 and the terminal 400. An electrical connection 600 between the terminal 400 and biometric data card 100 is formed through the contact pads of the terminal 400 and biometric data card 100. The terminal 400 provides electrical power to the biometric data card through the electrical connection 600. In addition, an electronic communications interface 610 between the terminal 400 and the biometric data card 100 is created through the electrical connection 600 in order to transmit signals between the terminal 400 and biometric data card 100.

Examples of signals sent between the terminal 400 and the biometric data card 100 are shown in FIG. 7. If the image of the biometric feature is captured on an image sensor within the terminal, the terminal 400 sends an image data signal 700 including image data representing the captured image to the biometric data card 100 for use in authenticating the user. During the authentication process, if the image data is insufficient to accurately authenticate the user, the biometric data card 100 can send a feedback signal 710 to the terminal 400 providing adjustment information, described above in connection with FIG. 3, to the terminal 400 for capturing an additional image of the biometric feature. Once the biometric data card 100 has completed the authentication process, the biometric data card 100 can send an authentication signal 720 to the terminal 400 providing authentication information indicating whether or not the user is authorized to access data on the biometric data card 100 and/or terminal 400. The authentication information can be displayed to the user through the user interface on the terminal 400. If the user is authenticated and authorized to access information on the biometric data card 100 and/or terminal 400, personal data associated with the user and stored within the biometric data card 100 can be sent to the terminal 400 in a personal data signal 730 for display or use by the terminal 900 or a remote server, and information entered by the user into the user interface of the terminal 400 can be sent from the terminal 400 to the biometric data card 100 in a user interface signal 740.

FIG. 8 is a flow chart illustrating an exemplary process 800 for authenticating a user on the biometric data card, in accordance with embodiments of the present invention. The authentication process begins at block 810. At block 820, current biometric image data representing feature characteristics of a current image of a biometric feature of a user is produced. At block 830, the current biometric image data is compared to stored biometric image data representing feature characteristics of a previous image of the biometric feature of the user to determine, at block 840, if the current biometric image data sufficiently matches the stored biometric image data to verify the identity of the user. If the current biometric image data sufficiently matches the stored biometric image data, at block 850, the user is authenticated. However, if the current biometric image data does not sufficiently match the stored biometric image data, at block 860, the user is not authenticated. The process ends at block 870.

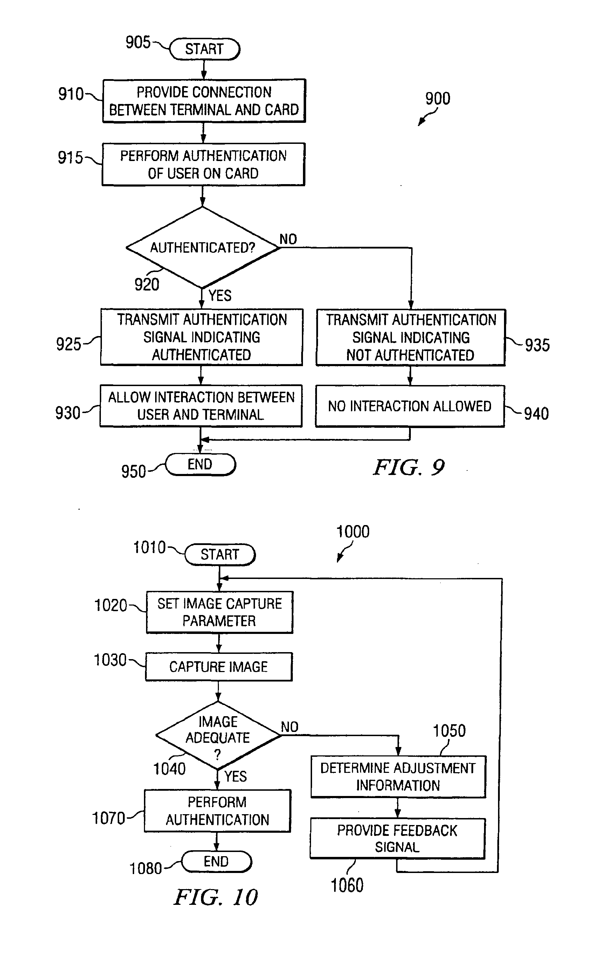

FIG. 9 is a flow chart illustrating an exemplary process 900 for authorizing a user to interact with a terminal using a biometric data card, in accordance with embodiments of the present invention. The authorization process begins at block 905. At block 910, a connection is established between a terminal and a biometric data card by inserting the card into the terminal. The establishment of the connection initiates an authentication process at block 915, such as the authentication process described in FIG. 8, to authenticate the user of the biometric data card. If the user is authenticated at block 920, an authentication signal containing authentication information indicating that the user is authenticated is transmitted to the terminal at block 925 to allow interaction between the user and the terminal and/or biometric data card at block 930. However, if the user is not authenticated at block 920, the authentication information sent in the authentication signal at block 935 indicates that the user is not authenticated to prevent interaction between the user and the terminal and/or biometric data card at block 940. The process ends at block 950.

FIG. 10 is a flow chart illustrating an exemplary process for providing feedback to set image capture parameters, in accordance with embodiments of the present invention. The feedback process begins at block 1010. At block 1020, various image capture parameters are set by an image acquisition system responsible for capturing an image of a biometric feature of a user. Examples of image capture parameters include, but are not limited to, illumination intensity, lens focus, amount of zoom, exposure duration of the sensor or resolution of the sensor. At block 1030, the image of the biometric feature of the user is captured using the set image capture parameters, and at block 1040, a determination is made whether the captured image is adequate to authenticate the user.

If the image is not adequate, at block 1050, adjustment information indicating the image capture parameter adjustments that need to be made to capture an adequate image is determined, and at block 1060, the adjustment information is included in a feedback signal transmitted to the image acquisition system to reset the image capture parameters at block 1020. In one embodiment, the image acquisition system is completely within the biometric data card. In another embodiment, the image acquisition system is completely within the terminal. In a further embodiment, the image acquisition system is split between the terminal and biometric data card. If the image is adequate, at block 1070, an authentication process, such as the process described in FIG. 8, is performed. The feedback process ends at block 1080.

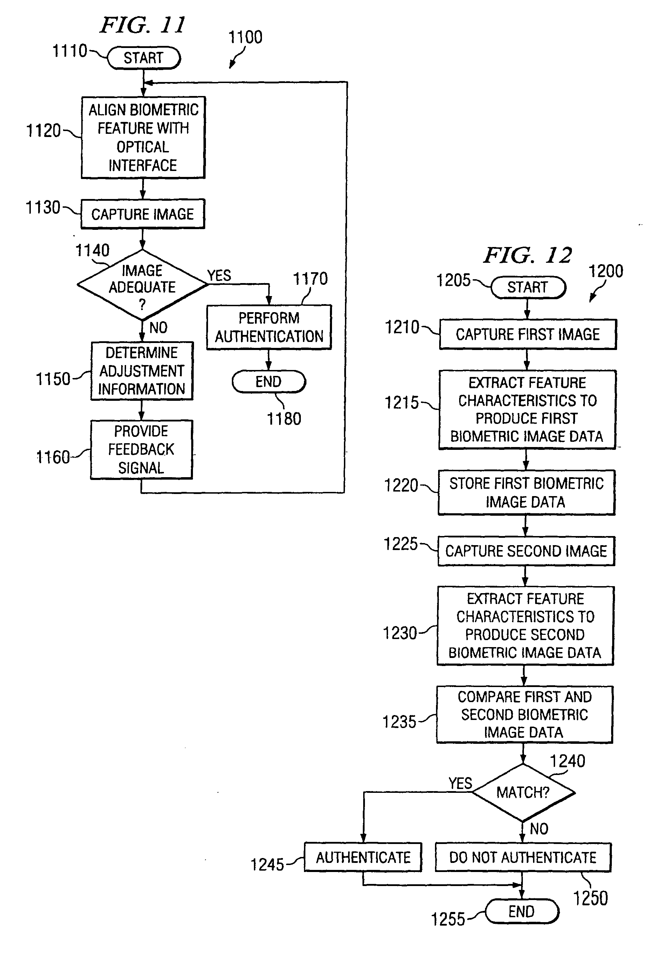

FIG. 11 is a flow chart illustrating an exemplary process 1100 for providing feedback to align the biometric feature for image capture, in accordance with embodiments of the present invention. The feedback process begins at block 1110. At block 1120, a user aligns a biometric feature of the user with an optical interface to capture an image of the biometric feature, at block 1130. At block 1140, a determination is made whether the captured image is adequate to authenticate the user.

If the image is not adequate, at block 1150, adjustment information indicating the biometric feature alignment adjustments that need to be made to capture an adequate image is determined, and at block 1160, the adjustment information is included in a feedback signal and presented to the user to realign the biometric feature with the optical interface at block 1020. For example, the user can be provided with steering directions to help the user align the biometric feature (e.g., face, eye, hand, etc.) with the optical interface. In one embodiment, the optical interface is within the biometric data card. In another embodiment, the optical interface is within the terminal. If the image is adequate, at block 1170, an authentication process, such as the process described in FIG. 8, is performed. The feedback process ends at block 1180.

FIG. 12 is a flow chart illustrating an exemplary process 1200 for capturing and comparing stored biometric image data with current biometric image data to authenticate a user, in accordance with embodiments of the present invention. The authentication process begins at block 1205. At block 1210, a first image of a biometric feature of the user is captured and first raw image data representing the first image is produced. At block 1215, feature characteristics of the biometric feature are extracted from the first raw image data to produce first biometric image data, and at block 1220, the first biometric image data is stored. Examples of biometric image data include, but are not limited to, iris patterns, fingerprint patterns, facial patterns and hand patterns.

Thereafter, at block 1225, a second image of the biometric feature of the user is captured, and at block 1230, feature characteristics of the biometric feature are extracted to produce second biometric image data. The second biometric image data is compared to the stored first biometric image data at block 1235 to determine, at block 1240, if the second biometric image data sufficiently matches the stored first biometric image data to verify the identity of the user. If the second biometric image data sufficiently matches the stored first biometric image data, at block 1245, the user is authenticated. However, if the second biometric image data does not sufficiently match the stored first biometric image data, at block 1250, the user is not authenticated. The process ends at block 1255.

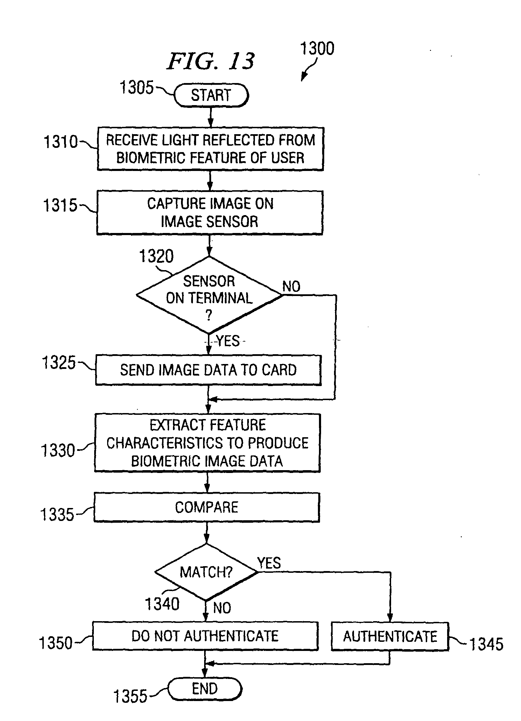

FIG. 13 is a flow chart illustrating another exemplary process 1300 for authenticating a user on a biometric data card, in accordance with embodiments of the present invention. The authentication process begins at block 1305. At block 1310, light reflected from the biometric feature of the user is received, and at block 1315, the light is directed onto an image sensor to capture an image of the biometric feature and produce raw image data representing the image. At block 1320, if the image sensor is located on the biometric data card, feature characteristics of the biometric feature are extracted from the raw image data to produce biometric image data. However, if the image sensor is located on the terminal, at block 1325, the terminal sends an image data representing the image of the biometric feature of the user to the biometric data card prior to the feature characteristics being extracted at block 1330.

The extracted biometric image data is compared to stored biometric image data at block 1335 to determine, at block 1340, if the extracted biometric image data sufficiently matches the stored biometric image data to verify the identity of the user. If the extracted biometric image data sufficiently matches the stored biometric image data, at block 1345, the user is authenticated. However, if the extracted biometric image data does not sufficiently match the stored biometric image data, at block 1350, the user is not authenticated. The process ends at block 1355.

The innovative concepts described in the present application can be modified and varied over a wide rage of applications. Accordingly, the scope of patents subject matter should not be limited to any of the specific exemplary teachings discussed, but is instead defined by the following claims.

## Claims

1. A biometric data card (100), comprising:
an image sensor (130) for capturing an image of a biometric feature (500) of a user of the biometric data card (100) and producing first image data (170) representing the image;
a memory (150) operable to store second image data; and
a processor (140) in communication with said image sensor (130) and said memory (150), said processor (140) operable to perform a comparison of the first image data (170) with the second image data, and, to generate, in response to the comparison, authentication information (300) representative of an authentication of the user.

2. The biometric data card (100) of Claim 1, further comprising:
an interface (160) operable to transmit the authentication information (330) from the biometric data card (100) to a terminal 400).

3. A terminal (400) for authenticating a user of the terminal (400), comprising:
an optical interface (420) configured to receive light (515) reflected from a biometric feature (500) of the user;
an optical element (540) optically coupled to said optical interface (420) via an optical path (520), said optical element (540) operable to form an image of the biometric feature (500) from the reflected light (515) and to direct the image onto an image sensor (130); and
a card interface (550) configured to receive a biometric data card (100) and operable to authenticate the user based on the image and to provide an authentication signal (720) to the terminal (400).

4. The terminal (400) of Claim 3, wherein the card interface (550) is further operable to receive a feedback signal (710) from the biometric data card (100), the feedback signal (710) providing adjustment information (330) to the terminal (400) for use in capturing an additional image of the biometric feature (500).

5. The terminal (400) of Claim 3 or 4, wherein the image sensor (130) is part of the terminal (400), and wherein the card interface (550) is further operable to transmit image data representing the image produced by the image sensor to the biometric data card (100).

6. The terminal (400) of Claim 3 or 4, wherein the image sensor (130) is part of the biometric data card (100), and wherein said card interface (550) is optically coupled to said optical interface (420) and said optical element (540) to direct the image onto the image sensor (130) within the biometric data card (100).

7. A system for authenticating a user, comprising:
a biometric data card (100) including an image sensor (130) for capturing an image of a biometric feature (500) of the user and for producing first image data (170) representing the image, said biometric data card (100) operable to perform a comparison of the first image data (170) with second image data, and, to generate, in response to the comparison, authentication information (330) representative of an authentication of the user; and
a terminal (400) including a card interface (550) configured to receive said biometric data card (100) and operable to receive the authentication information (330) from said biometric data card (100), said terminal (400) further including an optical element (540) arranged to direct light (515) from the biometric feature (500) onto the image sensor (130).

8. The system of Claim 7, wherein the card interface (550) is further operable to receive from the biometric data card (100) adjustment information (330) for use by said terminal (400) in capturing an additional image of the biometric feature (500).

9. A method for authenticating a user using a biometric data card (100), the method comprising:
producing (820) in the biometric data (100) card first biometric image data in response to an image of a biometric feature (500) of the user;
comparing (830) in said biometric data card (100) the first biometric image data with second biometric image data; and
authenticating (850) the user in response to said comparing (830).

10. The method of Claim 9, wherein said producing (820) includes capturing (1315) the image on an image sensor external to the biometric data card (100), and transmitting (1325) resulting image data to the biometric data card (100).
